(19) Europäisches Patentamt
European Patent Office
Office européen des brevets

(11) Publication number: **0 478 018 A1**

# (12) EUROPEAN PATENT APPLICATION

(21) Application number: **91121672.9**

(51) Int. Cl.$^5$: **C02F 5/12**

(22) Date of filing: **05.12.87**

This application was filed on 18 - 12 - 1991 as a divisional application to the application mentioned under INID code 60.

(30) Priority: **08.12.86 US 939333**
**08.12.86 US 938896**
**08.12.86 US 939498**

(43) Date of publication of application:
**01.04.92 Bulletin 92/14**

(60) Publication number of the earlier application in accordance with Art.76 EPC: **0 271 035**

(84) Designated Contracting States:
**AT BE CH DE ES FR GB GR IT LI LU NL SE**

(71) Applicant: **THE B.F. GOODRICH COMPANY**
**3925 Embassy Parkway**
**Akron Ohio 44313-1799(US)**

(72) Inventor: **Amjad, Zahi**
**32611 Redwood Boulevard**
**Avon Lake, Ohio 44012(US)**
Inventor: **Masler, William Frank, III**
**1026 Mattingly Road**
**Hinckley, Ohio 44233(US)**

(74) Representative: **von Kreisler, Alek, Dipl.-Chem. et al**
**Patentanwälte Von Kreisler-Selting-Werner,**
**Deichmannhaus am Hauptbahnhof**
**W-5000 Köln 1(DE)**

## (54) Treatment of aqueous medium with copolymers containing acrylamidoalkane sulfonic acid.

(57) Treatment of an aqueous medium is attained by adding to said aqueous medium 0.5 to 500 ppm of a copolymer containing at least one of each of the following three monomers:

(a) monounsaturated carboxylic acids as well as salts and anhydrides thereof, the acids containing 3 to 5 carbon atoms, such as acrylic acid, methacrylic acid, maleic acid or its anhydride;

(b) acrylamidoalkane sulfonic acids and salts thereof, such as 2-acrylamido-2-methylpropane sulfonic acid; and

(c) primary copolymerizable monomers selected from acrylamides, alkyl acrylates, vinyl sulfonic acid and salts thereof, hydroxyalkyl acrylates, styrene sulfonic acids and salts thereof, allyloxy hydroxyalkane sulfonic acids and salts thereof, and vinyl carboxylates, and hydrolyzed vinyl carboxylates.

Addition of the copolymer to said aqueous medium results in one or all of the following: inhibition of scale formation, metal ion stabilization, and dispersion of particulate matter.

EP 0 478 018 A1

## BACKGROUND OF THE INVENTION

Most industrial waters contain alkaline earth and transition metal cations such as calcium, barium, iron, zinc, manganese, and magnesium, and several anions such as bicarbonate, carbonate, sulfate, phosphate, silicate, and fluoride. When combinations of these anions and cations are present in concentrations which exceed the solubility of their reaction products, precipitates form until these product solubility concentrations are no longer exceeded. For example, when the ionic product of calcium and carbonate exceeds the solubility of calcium carbonate, a solid phase of calcium carbonate will form.

Solubility product concentrations are exceeded for reasons such as partial evaporation of the water phase, change in pH, pressure or temperature, and the introduction of additional ions which form insoluble compounds with the ions already present in the solution.

As these reaction products precipitate on surfaces of the water-carrying system, they form scale or deposits. This accumulation prevents effective heat transfer, interferes with fluid flow, facilitates corrosive processes, and harbors bacteria. This scale is an expensive problem in many industrial water systems, such as recirculating cooling water systems in cooling towers, in that the scale causes delays and shutdowns for cleaning and removal of the scale.

Citric acid, gluconic acid, and other materials have been used in the past to stabilize iron in solution and thus prevent its precipitation in forms such as ferric hydroxide and ferric oxide, wherein iron is in the third oxidation state. Citric acid and such materials effectively maintain iron in solution by forming complexes therewith which are soluble in water and thereby, remain dissolved in water. Although citric acid and cognate materials are effective as stabilizing agents for iron in solution, they are not antiscalants and are ineffective against scale such as calcium carbonate, calcium phosphate, and calcium sulfate.

Furthermore, performance of the prior art chelants is strongly dependent on solution pH. For example, iron (III) stabilization at 2 ppm of citric acid was 79% at pH of 7 but only 2% at pH of 8. In other words, an increase in solution pH from 7 to 8 decreased citric acid performance approximately forty times.

In USP 3,928,196, a method is disclosed for inhibiting scale formation using two-component copolymers. The copolymers, which contain 5-50 mole percent acrylamidoalkane sulfonic acid and 95-50 mole percent of acrylic acid or a similar acid, have molecular weight of 1,000 to 10,000. The 25/75 mole percent copolymer of acrylamidomethylpropane sulfonic acid (AMPS) and acrylic acid (AA) is equivalent to 49/51 weight ratio whereas the 75/25 mole percent copolymer of AMPS and AA, is equivalent to 89.5/10.5 weight ratio.

USP 4,552,665 discloses a process for stabilizing dissolved manganese ion and its reaction products in an aqueous solution by adding thereto 0.1 to 20 ppm of a copolymer of an unsaturated carboxylic acid or its salt and an unsaturated sulfonic acid or its salt. Acrylic acid is an example of the unsaturated carboxylic acid and 2-acrylamido-2-methylpropane sulfonic acid (AMPS) is an example of the unsaturated sulfonic acid. The disclosed copolymers include 2-component copolymers and 3-component copolymers or terpolymers.

Common particulate deposits in aqueous medium include iron oxides, calcium and magnesium carbonates, sulfates, oxalates, and phosphates, as well as silt, alumina, aluminum silicates, and clays. Environments where some of the deposition problems are often encountered range from silt and mud accumulation in bottoms of water storage tanks and ballast tanks of vessels and on ships, to the fouling problems which occur in water cooling systems using the once-through or recirculating systems, and to deposition problems which would occur in cooling and boiler water systems if the water were not treated beforehand.

If all particulate matter could be kept dissolved or at least maintained in suspension, if already in solid state, there would never be any deposition problems to contend with. The phenomenon of suspension involves settling of particles in a liquid medium. The parameters which control settling rates are particle size and relative density of liquid and particles. However, once particles have settled, the nature of the resulting sludge is dependent on the attractive forces between the particles and the surfaces which they contact. If the attractive forces between particles are strong, the formed deposit will be dense but if the attractive forces between the particles are weak, deposition is less likely to occur, particularly at flow conditions.

U.S. patents 3,709,815 and 3,709,816 are directed to boiler water treatment and to control of alluvial and other deposits in aqueous systems by the use of homopolymers and copolymers of acrylamido-alkane sulfonic acid, such as 2-acrylamido-2-methylpropane sulfonic acid or AMPS. The comonomers are selected from water-soluble and water-insoluble monomers. Suitable comonomers include acrylic acid, variants and salts thereof and acrylamide, variants and substituted forms thereof, as well as alkali metal styrene sulfonates and vinyl benzoates, and others. The particulates encompassed by these patents include clay silt, calcium carbonate, hydrated ferric oxide, silica, magnetic iron oxide, calcium carbonate, magnesium

carbonate, aluminum silicate, and the like.

U.S. patents 3,806,367 and 3,898,037 issued from the same patent application. U.S. patent 3,806,367 is directed to the removal of rust and tubercules from a metal surface whereas U.S. patent 3,898,037 relates to inhibition of corrosion of a metal surface which is in contact with an aqueous solution. These patents disclose the use of dispersants which are homopolymers and copolymers of acrylamido-alkane sulfonic acid, such as 2-acrylamido-2-methyl propane sulfonic acid or AMPS. The copolymers can be polymers of two or three monomers, one of which is an acrylamidoalkane sulfonic acid. Suitable comonomers include acrylic acid, salts thereof and other versions of same; acrylamide and substituted versions thereof; vinyl compounds; vinyl acids and esters thereof; and the like. The comonomers are more fully described in col. 5 of U.S. patent 3,898,037.

This invention generally relates to inhibition of scale formation, stabilization of metal ions, and dispersion of particulates in aqueous systems. This is accomplished by adding to an aqueous system at least a threshold inhibition amount of a copolymer of at least three different monomers, i.e., monounsaturated carboxylic acid, salts and anhydrides thereof of 3 to 5 carbon atoms, an acrylamidoalkane sulfonic acid and salts thereof, and a primary copolymerizable monomer. The resulting copolymer is soluble in water and is effective in inhibiting precipitation of scale, in stabilizing metal ions, and in dispersing particulates in an aqueous system. Scale inhibition herein pertains particularly to calcium scale such as calcium phosphate, calcium sulfate, and calcium carbonate. Metal ion stabilization pertains particularly to iron in the third oxidation stage and dispersion pertains particularly to iron oxide. Inhibition of scale precipitation, metal ion stabilization and dispersion of particulate matter is accomplished with the herein-defined copolymers which are effective against scale in the presence or the absence of soluble metal ions such as iron, manganese, and zinc. Soluble iron ions referred to herein exist in either the II or the III oxidation state.

## SUMMARY OF THE INVENTION

This invention is directed to the inhibition of precipitation of scale-forming salts, to metal ion stabilization, and to dispersion of particulate matter in an aqueous medium by addition thereto of an effective threshold inhibition amount of a copolymer which contains at least three different repeating groups. Such copolymers include polymerized monounsaturated carboxylic acid of 3 to 5 carbon atoms and salts thereof, polymerized acrylamidoalkane sulfonic acid, and a primary comonomer selected from acrylamides, alkyl acrylates, vinyl sulfonic acid and salts thereof, hydroxyalkyl acrylates and methacrylates, styrene sulfonic acids and salts thereof, allyloxy hydroxyalkane sulfonic acids and salts thereof, and vinyl carboxylates and hydrolyzed vinyl carboxylates.

## DETAILED DESCRIPTION OF THE INVENTION

The copolymers disclosed herein are effective as water treating agents. More specifically, the copolymers described herein are effective in reducing precipitation of scale-forming salts, in stabilizing metal ions and in dispersing particulate matter in aqueous media. Such salts include calcium phosphate, calcium sulfate, barium sulfate, magnesium hydroxide, strontium sulfate, and calcium carbonate, and particularly calcium salts such as calcium phosphate. Metal ions contemplated herein include iron (II and III), _______. Amount of such copolymer that is added to an aqueous medium is at least an effective threshold inhibition amount which is in the range of 0.5 to 500 parts per million (ppm) of the aqueous medium, preferably 1 to 50 ppm. Although the aqueous medium can be acidic, in a preferred embodiment, it is neutral or alkaline.

Specific applications contemplated herein where the copolymers can be used include aqueous systems used in recirculating cooling towers, steam boilers, desalination, oil field applications in the secondary oil recovery operations, flash distillation, as well as in aqueous systems such as sugar solutions. The copolymers are effective in reducing precipitation of scale in the presence or the absence of soluble metal ions such as iron, manganese, zinc, and mixtures thereof and mixtures thereof with other metal ions. The copolymers are also effective in stabilizing metal ions in an aqueous system and in dispersing particulate matter therein. Such copolymers are useful as scale inhibitors, and/or metal ion stabilizers, and/or dispersants of particulate matter.

The copolymers can be in unneutralized or neutralized form. Such copolymers can be neutralized with a strong alkali, such as sodium hydroxide, in which instance, the hydrogen of the carboxyl group in the copolymer is replaced with sodium. With the use of an amine neutralizing agent, the hydrogen will be replaced with an ammonium group. Useful copolymers for purposes herein include copolymers that are

unneutralized, partially neutralized, and completely neutralized.

The copolymers are soluble in water up to at least about 20% solids concentration, and they must, of course, be soluble in water in amount used, to be effective for the intended purpose. The copolymers contemplated herein are polymers of at least three different monomers and include at least one monomer selected from each one of the following groups (a), (b), and (c):

(a) monounsaturated carboxylic acids of 3 to 5 carbon atoms, salts and anhydrides thereof;

(b) acrylamidoalkane sulfonic acids and salts thereof containing up to 6, preferably 1 to 4, carbon atoms in the alkane moiety; and

(c) primary copolymerizable monomers which aid in the antiscalant effectiveness of the copolymers.

In addition to the above three requisite monomers, a small amount of other or secondary copolymerizable monomers can also be used as long as they do not substantially deleteriously affect performance of the copolymers as antiscalants. Amount of such secondary copolymerizable monomers can generally vary up to about 20% by weight, preferably 2 to 10% by weight of the final copolymer.

The copolymers suitable herein are random non-crosslinked polymers containing polymerized units of one of more of each of the monomers (a), (b), and (c), identified above, and can contain a small proportion of polymerized units of one or more of the secondary copolymerizable monomers. The copolymers have weight average molecular weight of 1,000 to 100,000 but preferably 2,000 to 20,000. The molecular weight given herein is measured by gel permeation chromatography.

The copolymers disclosed herein contain 20 to 95% by weight of the polymerized carboxylic acid or its salt or anhydride, preferably 40 to 90%; 1 to 60% by weight of the polymerized sulfonic acid or its salt, preferably 10 to 50%; with remainder being one or more of the primary copolymerizable monomers. The copolymers can also include one or more polymerized secondary comonomers.

The carboxylic acid monomers contemplated herein include monounsaturated monocarboxylic and dicarboxylic acids, salts and anhydrides thereof, such as acrylic acid, methacrylic acid, maleic acid, maleic anhydride, and the like. Preferred in this class are monounsaturated monocarboxylic acids of 3 to 4 carbon atoms and water soluble salts thereof, particularly acrylic acid and methacrylic acid. Because of its availability, effectiveness and low price, acrylic acid is particularly preferred. Repeating units of acrylic acid, methacrylic acid, and salts thereof are represented as follows:

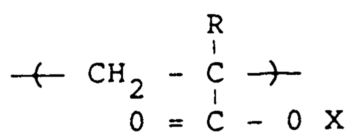

where R is hydrogen or methyl and X can be hydrogen, alkali metal, alkaline earth metal, or ammonium, particularly hydrogen, sodium, potassium, calcium, ammonium, and magnesium.

The repeating unit of acrylamidoalkane sulfonic acid and salts thereof are defined as follows:

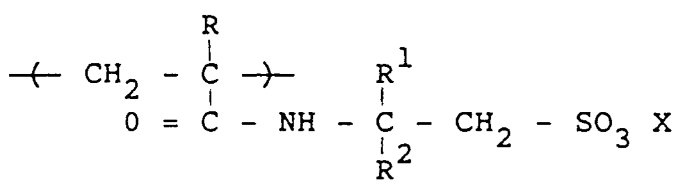

where R is hydrogen or methyl; X is hydrogen, ammonium, alkali metal or an alkaline earth metal, particularly hydrogen, ammonium or an alkali metal; and $R^1$ and $R^2$ are individually selected from hydrogen and alkyl groups of 1 to 4 carbon atoms. In a preferred embodiment, R is hydrogen and $R^1$ and $R^2$ are each an alkyl group of 1 to 3 carbon atoms. In this group of sulfonic acids, 2-acrylamido-2-methylpropane sulfonic acid or AMPS is a commercial, readily available monomer which is especially preferred for the purposes described herein.

The primary copolymerizable monomers are selected from substituted and unsubstituted acrylamides, substituted and unsubstituted alkyl acrylates, vinyl sulfonic acid and salts thereof, hydroxyalkyl acrylates, alkoxyalkyl acrylates, styrene sulfonic acids and salts thereof, allyloxy hydroxyalkane sulfonic acids and salts thereof, vinyl carboxylates and hydrolyzed vinyl carboxylates.

Repeating units of the substituted and unsubstituted acrylamides are defined as follows:

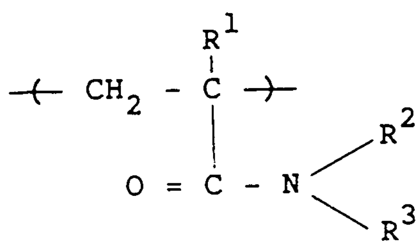

where $R^1$ is hydrogen or methyl and $R^2$ and $R^3$ are individually selected from hydrogen, alkyl and substituted alkyl groups each containing a total of 1 to 12 carbon atoms, preferably 2 to 8. Substituents on the $R^2$ and $R^3$ groups include alkyl, aryl, carboxyl, and keto groups. Specific examples of $R^2$ and $R^3$ include hydrogen, t-butyl, isopropyl, isobutyl, methyl, 2-(2,4,4-trimethylpentyl), and 2-(2-methyl-4-oxopentyl) groups.

Repeating units of the substituted and unsubstituted acrylates are defined as follows:

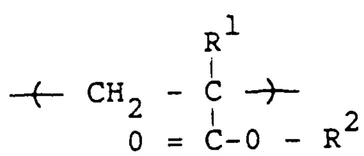

where $R^1$ is hydrogen or methyl and $R^2$ is an alkyl radical of 1 to 6, preferably 1 to 4 carbon atoms. The $R^2$ group can have substituents selected from alkyl, aryl and keto groups but in a preferred embodiment, the $R^2$ group is unsubstituted. Specific examples of suitable monomeric alkyl acrylates and methacrylates include ethyl acrylate and ethyl methacrylate.

Vinyl sulfonic acid is defined as follows:

$CH_2 = CH - SO_3H$

Included herein are also water-soluble salts of vinyl sulfonic acid wherein the hydrogen of the $SO_3H$ group is replaced with an alkali metal, alkaline earth metal, or an ammonium group, preferably an alkali metal or ammonium group.

Repeating units of polymerized hydroxyalkyl acrylates are defined as follows:

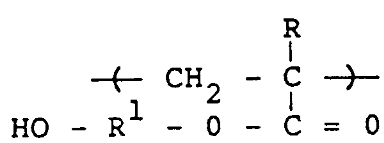

where R is hydrogen or a lower alkyl of 1 to 3 carbon atoms, preferably hydrogen or methyl; and $R^1$ is selected from lower alkylene groups of 1 to 6, preferably 2 to 4 carbon atoms. Some specific examples of suitable hydroxyalkyl acrylates include hydroxypropyl acrylate and hydroxypropyl methacrylate.

Repeating units of the alkoxyalkyl acrylates are defined as follows:

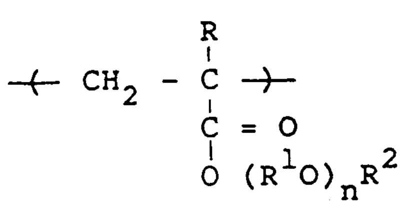

where R is hydrogen or methyl, $R^1$ is alkylene containing from 2 to 4, preferably 2 to 3 carbon atoms, n is an integer from 1 to 5, preferably 1 to 3, and $R^2$ is an alkyl group containing from 1 to 10, preferably 1 to 4 carbon atoms. Specific examples of alkoxyalkyl acrylate monomers include methoxyethyl acrylate, Cellosolve methacrylate, and 2-(2-ethoxyethoxy) ethyl acrylate.

Repeating units of styrene sulfonic acids and salts thereof are defined as follows:

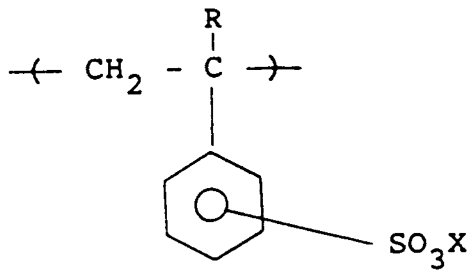

where R is hydrogen or a lower alkyl group of 1 to 6 carbon atoms, preferably hydrogen, and X is alkali metal or alkaline earth metal or ammonium, particularly hydrogen, ammonium or alkali metal. A particularly suitable sulfonic acid is styrene sulfonic acid where R is hydrogen and the $-SO_3X$ group is at the 3 or 4 position on the phenyl ring. The salts of styrene sulfonic acids are water-soluble. The sodium salt of styrene sulfonic acid is available commercially.

Repeating units of the allyloxy hydroxyalkane sulfonic acids and salts thereof are defined as follows:

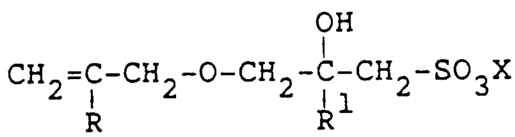

where R is hydrogen or methyl, $R^1$ is also hydrogen or methyl, and X is selected from hydrogen, alkali metal, alkaline earth metal and ammonium.

The vinyl carboxylates repeating units in the copolymers are defined as follows:

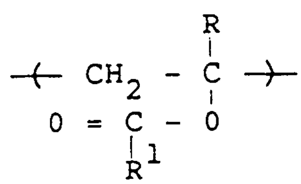

where R is hydrogen or a lower alkyl group of 1 to 6 carbon atoms, preferably 1 to 4, and $R^1$ is selected from alkyl groups of 1 to 12 carbon atoms, preferably 1 to 8. The vinyl carboxylates, in polymerized form, can be hydrolyzed to contain polymerized vinyl alcohol repeating units of the following structure:

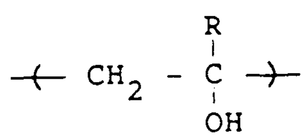

where R is hydrogen or a lower alkyl group of 1 to 6 carbon atoms, preferably 1 to 4. The R group of the hydrolyzed carboxylates corresponds to the R group on the vinyl carboxylates. Specific examples of vinyl carboxylates include vinyl acetate, vinyl propionate, and 2-propenyl acetate.

The monomers can be prepared, if desired, in a conventional manner but they are commercially available and therefore, can be purchased. Polymerization of the monomers results in an essentially non-crosslinked random copolymer, the molecular weight of which can be adjusted with a little trial and error. The copolymer is preferably formed in a high yield ranging from about 50% to about 99% by weight of the comonomers.

It is also a requirement that the copolymer be soluble in water. Typically, the copolymer is used in water in the range of 0.5 to 500 ppm. Thus, high solubility of water treatment compositions is not essential but desirable. The product is preferably shipped in drums as a concentrated aqueous solution containing in the range of about 20% to about 50% by weight of solids per 100 parts of solution, which requires solubility to the extent of at least 20 weight parts per 100 parts of water.

Polymerization of the monomers identified herein can be carried out in a mutual solvent for both, such

as in a lower alkanol of about 1 to 6 carbon atoms, or in water, with an effective amount of a free radical initiator sufficient to produce the desired composition within an acceptable period of time. The monomeric acids can be used as such or can be in a partially or a completely neutralized from prior to polymerization.

The reaction is conveniently carried out in water as the only reaction medium at a temperature in the range of about 30° to about 130°C usually at atmospheric or slightly elevated pressure. Though the solubility of certain substituted acrylamides in water is poor, the acrylic acid dissolves the substituted acrylamide first, forming a solution which is added to the water or solvent, allowing the reaction to proceed smoothly. The concentration of the copolymer formed may range from about 5% to about 50% by weight, based on total solids, which solution can be shipped directly.

The copolymer may also be formed in an acyclic ketone, such as acetone, in an alkanol, in water, or mixtures thereof. If, for example, the copolymer is formed in an organic solvent, or a mixture of an organic solvent and water, the copolymer is converted from the organic solvent solution to a water solution. Typically, the organic solvent is stripped from the solution with steam or distilled off with subsequent additions of water and repetition of distillation to remove the solvent, followed by the addition of water and a neutralizing agent such as caustic solution, ammonia, a hydrazine, or a low-boiling primary, secondary or tertiary aliphatic amine.

The final aqueous solution of polymer salt is preferably in the range of about pH 2 to about pH 8, with a total solids content of about 5 to about 50% by weight of polymer in water.

The copolymers formed may have weight average molecular weight in the range of about 1,000 to about 100,000, and preferably about 2,000 to about 20,000, as determined by gel permeation chromatography. The acid numbers of the copolymers formed, as determined by a conventional titration with KOH, may range from about 300 to about 740, corresponding to a weight fraction of from 40% to about 95% by weight of monomer units having COOH groups expressed as acrylic acid. The preferred polymers have more than 50% by weight of free carboxyl groups and an acid number in the range from about 390 to about 700.

In a typical polymerization process, a glass lined or stainless steel jacketed reactor is charged with predetermined amounts of monomers along with solvent and a free radical polymerization catalyst under a nitrogen blanket, and the reaction mixture allowed to exotherm under controlled temperature conditions maintained by a heat-transfer fluid in the jacket of the reactor. The pressure under which the reaction occurs is not critical, it being convenient to carry it out under atmospheric pressure.

The copolymers described herein in connection with threshold inhibition of salt-forming scales, metal ion stabilization, and/or dispersants of partaiculate matter, can be used in combination with other conventional additives wherever appropriate. Examples of some of the conventional additions include precipitating agents, oxygen scavengers, sequestering agents, corrosion inhibitors, antifoaming agents, and the like.

In reference to scale inhibition, the copolymers formed in the manner described herein were used to treat water which contained calcium ions and phosphate ions in a stirred pH-STAT test while maintaining constant pH and using an automatic tritrator to gauge the effectiveness of the polymer for inhibiting the formation and deposition of calcium phosphate. The test was carried out as follows: a known volume of a phosphate salt solution, such as $Na_2HPO_4$, or another soluble phosphate salt solution, was transferred to a known volume of distilled water in a double-walled glass cell to give a final concentration of 9-10 ppm of orthophosphate ions. To this solution was added slowly and with continuous stirring a known volume of testing polymer solution sufficient to give a dosage of 10 ppm.

A pair of glass and reference electrodes, which were calibrated before and after each experiment with standard buffer solutions of pH 7.00 and 9.00, was then immersed in the solution which was maintained at 50°C by circulating water through the outside of a glass cell jacket. After about 45 minutes, a known volume of calcium chloride solution was slowly added to the continuously stirred solution containing phosphate and polymer, to give a final calcium ion concentration of 140 ppm. The pH of the solution was then immediately brought to pH 8.50 by automatic addition of 0.10M NaOH solution. The pH of the solution was then maintained at 8.50±0.01 throughout the experiment using the pH-stat technique. Solution samples were withdrawn after 22 hours, and analyzed, after filtration through 0.22 micrometer filter paper, for orthophosphate ions using the ascorbic acid method, as described in detail in "Standard Methods for the Examination of Water and Waste Water" 14th edition, prepared and published by American Health Association. The instrument used for the colorimetric measurements was a Beckman 5270 Spectrophotometer.

Tests for calcium sulfate and calcium carbonate were carried out by the method of Ralston, see J. Pet. Tech., August 1969, 1029-1036.

The percent threshold inhibition (TI) attained for each experiment was obtained using the following formula, shown in this case for calcium phosphate:

$$\% \; TI = \frac{(PO_4)\; exp - (PO_4)\; final}{(PO_4)\; initial - (PO_4)\; final} \times 100$$

where

$(PO_4)$ exp = concentration of phosphate ion in the filtrate in presence of the copolymer at time of 22 hours

$(PO_4)$ final = concentration of phosphate ion in filtrate in absence of the copolymer at time 22 hours

$(PO_4)$ initial = concentration of phosphate ion at time zero.

To determine effectiveness of the copolymers as metal ion stabilizers, 1 ml of ferric chloride was added to 100 mls of synthetic water containing 0-5 ppm of the copolymers in a 125 ml glass bottle. The synthetic water used in the metal ion stabilization test was made by mixing standard solutions of calcium chloride, magnesium chloride, sodium bicarbonate, sodium sulfate and sodium chloride. Analysis of the water used in the tests, is given below:

| | |
|---|---|
| Ca | = 300 ppm |
| Mg | = 300 ppm |
| Na | = 1113 ppm |
| Fe | = 1 ppm |
| Cl | = 2,170 ppm |
| $SO_4$ | = 700 ppm |
| $HCO_3$ | = 97 ppm |

The test was run for 2 hours, at room temperature and under static conditions. The solutions were filtered through a 0.22 micron filter and the filtrate was analyzed for soluble metal ion by atomic absorption spectroscopy. Percent metal ion stabilization was calculated as follows, here shown for iron:

$$\% \; iron\; stabilization = \frac{iron\; (exp) - iron\; (e)}{iron\; (initial) - iron\; (e)} \times 100$$

where:

iron (exp) = concentration of iron in the presence of the copolymer at t = 2 hours

iron (e) = concentration of iron in the absence of the copolymer at t = 2 hours

iron (initial) = concentration of iron at t = 0

Dispersant activity of the copolymers tested herein was measured as a function of time for a particulate concentration of a copolymeric dispersant which was tested in a dilute aqueous solution. In these tests, 0.12 grams of iron oxide was added to an 800 ml beaker containing 600 mls synthetic water and the indicated amount of the copolymer. Synthetic water had the following composition:

| | |
|---|---|
| Ca | = 100 ppm |
| Na | = 314 ppm |
| $SO_4$ | = 200 ppm |
| Mg | = 30 ppm |
| Cl | = 571 ppm |
| $HCO_3$ | = 60 ppm |

The slurries were stirred using 6 paddle stirrer and % transmittance (T) determined at known time using a Brinkmann PC-1000 colorimeter. Dispersancy was measured as a function of amount of iron oxide dispersed. The performance of the polymer was determined by comparing % T values of the slurries containing polymer against control with no polymer. Greater dispersancy was, therefore, indicated by lower % T value which means that the lower % T numbers indicated greater polymer effectiveness.

The invention disclosed herein is demonstrated by the following examples which show preparation of the copolymers and threshold inhibition tests thereof and other related polymers.

## EXAMPLE 1

This example demonstrates preparation of the copolymer of acrylic acid, 2-acrylamido-2-methylpropane sulfonic acid (AMPS), and t-butyl acrylamide in the respective weight ratio of 60:20:20 having weight

average molecular weight of about 10,000.

A monomer solution was prepared by dissolving t-butylacrylamide (40g) in acrylic acid (120g) and adding to this mixture a solution of AMPS (40g) in water (40g). The monomer solution was charged to a reservoir connected to a metering pump set to deliver the monomer solution at a constant rate over 2 hr.

An initiator solution was prepared by dissolving t-butylperoxypivalate (4g of a 75% solution in mineral spirits) in 84% isopropanol/water (30g). This mixture was charged to a syringe and the syringe was placed in a syringe pump set to deliver the initiator solution at a constant rate over 3 hr.

A one-liter 3-neck round bottom flask equipped with a reflux condenser and nitrogen inlet, a mechanical stirrer, and inlets for monomer and initiator was charged with 84% isopropanol/water (270g). The flask was flushed with nitrogen and held under a slight positive pressure of nitrogen during the polymerization. The solvent was heated to reflux and metering of monomer and initiator was begun simultaneously. At the end of all metering, the mixture was heated and allowed to reflux for one hour additional. The polymer solution was then sparged with steam to convert it to a solution of polymer in water.

The final product solution contained 38.89% polymer solids by weight, and the acid number of the polymer was 444. The polymer molecular weight was estimated to be about 10,000.

EXAMPLE 2

This example demonstrates threshold inhibition by various polymers, including the copolymers of this invention, of calcium phosphate, calcium sulfate, and calcium carbonate scale. The tests were carried out in the manner described above for 22 hours to determine percent threshold inhibition of calcium phosphate using the various polymers indicated below. Results of the tests are given below in Table I.

TABLE I

| Test No. | Copolymer Composition | Wt. Ratio | Mol. Wt. | Polymer Level, ppm | % TI $Ca-PO_4$ | % TI(a) $Ca\ SO_4$ | % TI(b) $Ca\ CO_3$ |
|---|---|---|---|---|---|---|---|
| 1 | Control | no polymer | | | 0 | 0 | 0 |
| 2 | AA:AMPS | 80:20 | 10,000 | 7.5 | 17(13) | | |
| 3 | AA:AMPS | 70:30 | 10,000 | 7.5 | 52(20) | | |
| 4 | AA:AMPS | 51-49 | 10,000 | 7.5 | 75(31) | | |
| 5 | AA:t-BuAM | 50:50 | 10,000 | 7.5 | 15(13) | 76 | 51 |
| 6 | AA:MAA:t-BuAM:AMPS | 60:20:10:10 | 10,000 | 7.5 | 77(49) | 99 | |
| 7 | AA:t-BuAM:AMPS | 60:20:20 | 10,000 | 7.5 | 83(56) | 97 | 35 |
| 8 | AA:MAA:t-BuAM:AMPS | 30:20:20:30 | 10,000 | 7.5 | 86(50) | 50 | 48 |
| 9 | AA:MAA:i-PrAM:AMPS | 40:10:20:30 | 10,000 | 7.5 | 89(76) | 83 | 27 |
| 10 | AA:MAA:i-PrAM:AMPS | 40:10:30:20 | 10,000 | 7.5 | 81(60) | 73 | 43 |
| 11 | AA:i-PrAM | 50:50 | 10,000 | 7.5 | 65(55) | | 49 |
| 12 | AA:i-PrAM | 50:50 | 17,000 | 7.5 | 17(11) | | |
| 13 | AA:t-BuAM | 80:20 | 12,000 | 7.5 | 50(11) | | |
| 14 | AA:MAA:t-BuAM | 60:20:20 | 10,000 | 7.5 | 53(19) | 99 | |
| 15 | AA:MAA:t-BuAM:AMPS | 40:10:20:30 | 10,000 | 7.5 | 76(55) | 69 | 48 |
| 16 | AA | 100 | 5,000 | 7.5 | 0 (0) | | |
| 17 | AMPS | 100 | 10,000 | 7.5 | 0 | | |
| 18 | AA:DAAM | 80:20 | 10,000 | 7.5 | 41(16) | 98 | 51 |
| 19 | AA:DAAM:AMPS | 60:20:20 | 10,000 | 7.5 | 66(40) | 97 | 49 |
| 20 | AA:MMA | 80:20 | 10,000 | 7.5 | 57(15) | 99 | 36 |
| 21 | AA:MMA:AMPS | 60:20:20 | 10,000 | 7.5 | 56(54) | 98 | 50 |
| 22 | AA:VOAc | 80:20 | 10,000 | 7.5 | 33(12) | | |

TABLE I (cont'd)

| Test No. | Copolymer Composition | Wt. Ratio | Mol. Wt. | Polymer Level, ppm | % TI Ca-$PO_4$ | % TI(a) Ca $SO_4$ | % TI(b) Ca $CO_3$ |
|---|---|---|---|---|---|---|---|
| 23 | AA:VOH | 80:20 | 10,000 | 7.5 | 12(10) | | |
| 24 | AA:VOAc | 70:30 | 10,000 | 7.5 | 39(18) | 98 | 75 |
| 25 | AA:VOH | 70:30 | 10,000 | 7.5 | 15(11) | 99 | 82 |
| 26 | AA:VOAc:AMPS | 60:10:30 | 10,000 | 7.5 | 68(49) | 98 | 55 |
| 27 | AA:VOH:AMPS | 60:10:30 | 10,000 | 7.5 | 56(31) | 99 | 59 |
| 28 | AA:VOAc:AMPS | 50:30:20 | 10,000 | 7.5 | 83(64) | | 58 |
| 29 | AA:VOH:AMPS | 50:30:20 | 10,000 | 7.5 | 51(39) | | 59 |
| 30 | AA:VOAc:AMPS | 50:20:30 | 10,000 | 7.5 | 86 | 88 | |
| 31 | AA:VOH:AMPS | 50:20:30 | 10,000 | 7.5 | 58 | 95 | |
| 32 | AA:AMPS | 90:10 | 10,000 | 10 | 18 | | |
| 33 | AA:AMPS | 80:20 | 10,000 | 10 | 75(19) | | 81 |
| 34 | AA:AMPS | 70:30 | 10,000 | 10 | 91(80) | | |
| 35 | AA:AMPS | 60:40 | 10,000 | 10 | 91(76) | | 62 |
| 36 | AA:AMPS | 51:49 | 10,000 | 10 | 97(95) | 100 | 45 |
| 37 | AA:MAA:tBuAm:AMPS | 60:20:10:10 | 10,000 | 10 | 91(87) | | |
| 38 | AA:tBuAm:AMPS | 60:20:20 | 10,000 | 10 | 89(71) | | |
| 39 | AA:HPA | 67:33 | 10,000 | 10 | 77 | | 21 |
| 40 | AA:HPA:AMPS | 60:30:10 | 10,000 | 10 | 83 | | 16 |
| 41 | AA:iPrAm | 80:20 | 10,000 | 10 | 79 | | |
| 42 | AA:iPrAm | 60:40 | 10,000 | 10 | 88 | | |
| 43 | AA:iPrAm | 50:50 | 10,000 | 10 | 65(59) | 87 | |
| 44 | AA:iPrAm:AMPS | 60:20:20 | 10,000 | 10 | 90(89) | | 50 |
| 45 | AA:iPrAm:AMPS | 70:20:10 | 10,000 | 10 | 91(87) | 97 | |

TABLE I (cont'd)

| Test No. | Copolymer Composition | Wt. Ratio | Mol. Wt. | Polymer Level, ppm | % TI Ca-$PO_4$ | % TI(a) Ca $SO_4$ | % TI(b) Ca $CO_3$ |
|---|---|---|---|---|---|---|---|
| 46 | AA:MAA:MeOEA | 60:20:20 | 10,000 | 10 | 90(30) | 99 | 83 |
| 47 | AA:AMPS:MeOEA | 60:20:20 | 10,000 | 10 | 87(88) | 97 | 39 |
| 48 | AA:VOAc:AMPS | 50:20:30 | 10,000 | 10 | 94(87) | | |
| 49 | AA:VOH:AMPS | 50:20:30 | 10,000 | 10 | 87(76) | | |
| 50 | AA:VOAc:AMPS | 60:20:20 | 10,000 | 10 | 91(93) | 98 | 48 |
| 51 | AA:VOH:AMPS | 60:20:20 | 10,000 | 10 | 95(57) | 99 | |
| 52 | AA:VOAc:AMPS | 70:20:10 | 10,000 | 10 | 78(59) | | |
| 53 | AA:VOH:AMPS | 70:20:10 | 10,000 | 10 | 56(30) | | |
| 54 | AA:EMA | 60:40 | 10,000 | 10 | 25(15) | | 59 |
| 55 | AA:EMA:AMPS | 60:20:20 | 10,000 | 10 | 86(77) | 96 | 48 |
| 56 | AA:CMA | 80:20 | 10,000 | 10 | 77(32) | 99 | |
| 57 | AA:CMA:AMPS | 60:20:20 | 10,000 | 10 | 77(79) | | 49 |
| 58 | AA:MAA:CA | 60:20:20 | 10,000 | 10 | 78(36) | | |
| 59 | AA:MAA:AMPS:CA | 54:21:9:16 | 10,000 | 10 | 80(76) | | |
| 60 | AA:MAA:AMPS:CA | 50:20:15:15 | 6,000 | 10 | 89(68) | | |
| 61 | AA:MAA:AMPS:CA | 60:15:10:15 | 14,000 | 10 | 72(56) | | |

(a) Conditions: $[Ca^{++}]$ = 2000 ppm; $[SO_4]$ = 4800 ppm; T = 66°C; time = 24 hr; polymer = 4 ppm

(b) Conditions: $[Ca^{++}]$ = 224 ppm; $[HCO_3]$ = 760 ppm; $[CO_3]$ = 18 ppm; T = 66°C; polymer = 10 ppm

The following contractions appear in the above table:

AA = acrylic acid
MAA = methacrylic acid
HPA = hydroxypropyl acrylate
AMPS = 2-acrylamido-2-methylpropane sulfonic acid
t-BuAm = tertiary butyl acrylamide
i-PrAm = isopropyl acrylamide
VOAc = vinyl acetate
VOH = vinyl alcohol

| | |
|---|---|
| MeOEA | = methoxyethyl acrylate |
| EMA | = ethyl methacrylate |
| CA | = 2-(2-ethoxyethoxylethyl acrylate |
| DAAm | = diacetone acrylamide |
| MMA | = methyl methacrylate |
| CMA | = cellusolve methacrylate |

The numbers in parentheses indicate percent threshold inhibition of calcium phosphate in the presence of 1.0 ppm of soluble iron (III).

It has been shown that the copolymers disclosed herein are effective antiscalants in the presence or absence of soluble metal ions. Typical scales encompassed by the present invention include calcium scales such as calcium phosphate, calcium sulfate, and calcium carbonate.

The copolymers described herein can be used in aqueous recirculating systems where the copolymers are effective in reducing deposition of scale in the presence or the absence of soluble metals, such as iron. When an intolerable concentration of scale and/or soluble metal ions in the system is reached, additional copolymer can be added, however, at some point in time, the system is shut down and the aqueous phase is either replaced with a fresh aqueous phase or else the concentrated phase is treated to remove scale and/or soluble metal ions. The concentrated aqueous phase can also be slowly withdrawn and replaced with fresh water.

In reverse osmosis systems, wherein the copolymers can be used, concentration of scale and/or soluble metal ions is monitored until a point is reached when the system cannot operate due to the presence of excessive foulants in the system. At that time, the membranes are treated to reduce or remove the foulant content before placing them again in operation. In such reverse osmosis systems, amount of soluble metals, such as soluble iron, is on the order of up to about 10 ppm, preferably 1-5 ppm.

It has been shown that the terpolymers disclosed herein are effective scale inhibitors in the presence or absence of soluble metal ions. This is surprising since one would expect that such terpolymers would lose their effectiveness against scale in the presence of soluble metal ions.

Example 3

This example demonstrates stabilization of iron (III) by the various copolymers pursuant to the procedure outlined above. Results of the tests are set forth in Table A, below:

Table II

| Test No. | Polymer Composition | | Mw. Wt. | % Iron Stabilization @ 2 ppm Polymer |
|---|---|---|---|---|
| 1 | Control | | -- | 0 |
| 2 | AA:AMPS | 80:20 | 10,000 | 73 |
| 3 | AA:AMPS | 60:40 | 10,000 | 97 |
| 4 | AA:MAA:t-BuAm | 60:20:20 | 10,000 | 72 |
| 5 | AA:MAA:AMPS | 60:20:20 | 10,000 | 96 |
| 6 | AA:MAA:AMPS | 60:10:30 | 10,000 | 92 |
| 7 | AA:t-BuAM | 60:40 | 10,000 | 41 |
| 8 | AA:MAA:AMPS:t-BuAm | 60:20:10:10 | 10,000 | 92 |
| 9 | AA:MAA:AMPS:t-BuAm | 30:20:30:30 | 10,000 | 68 |
| 10 | AA:MAA:AMPS:t-BuAm | 40:10:30:20 | 10,000 | 61 |
| 11 | AA:iPrAm | 80:20 | 10,000 | 82 |
| 12 | AA:iPrAm | 60:40 | 10,000 | 62 |
| 13 | AA:AMPS:i-PrAm | 60:20:20 | 10,000 | 77 |
| 14 | AA:AMPS:i-PrAm | 70:10:20 | 10,000 | 88 |
| 15 | AA:AMPS:i-PrAm | 70:20:10 | 10,000 | 91 |
| 16 | AA:MAA:AMPS:i-PrAm | 60:20:10:10 | 10,000 | 91 |
| 17 | AA:MAA:AMPS:i-PrAm | 40:10:20:30 | 10,000 | 74 |
| 18 | AA:DAAM | 70:30 | 10,000 | 14 |
| 19 | AA:AMPS:DAAm | 60:20:20 | 10,000 | 39 |
| 20 | AA:AMPS:i-PrAm | 40:10:50 | 10,000 | 18 |
| 21 | AA:MAA:AMPS:CA | 54:21:9:16 | 10,000 | 60 |
| 22 | AA:MAA:AMPS:CA | 58:21:5:16 | 10,000 | 70 |

## Table II (cont'd)

| Test No. | Polymer Composition | | Mw. Wt. | % Iron Stabilization @ 2 ppm Polymer |
|---|---|---|---|---|
| 23 | AA:AMPS:MeOEA | 60:20:20 | 10,000 | 51 |
| 24 | AA:AMPS:EMA | 60:20:20 | 10,000 | 52 |
| 25 | AA:AMPS:CMA | 60:20:10 | 10,000 | 28 |
| 26 | i-PrAM | 100 | 10,000 | 0 |
| 27 | AMPS | 100 | 10,000 | 0 |
| 28 | AA | 100 | 10,000 | 25 |
| 29 | AA:MAA | 80:20 | 10,000 | 4 |
| 30 | MAA | 100 | 10,000 | 0 |
| 31 | AA:VOAc | 80:20 | 10,000 | 34 |
| 32 | AA:VOH | 80:20 | 10,000 | 6 |
| 33 | AA:VOAc | 70:30 | 10,000 | 44 |
| 34 | AA:VOH | 70:30 | 10,000 | 46 |
| 35 | AA:VOAc:AMPS | 70:10:20 | 10,000 | 27 |
| 36 | AA:VOAc:AMPS | 60:20:20 | 10,000 | 97 |
| 37 | AA:VOAc:AMPS | 60:20:20 | 7,000 | 98 |
| 38 | AA:VOAc:AMPS | 60:20:20 | 5,000 | 89 |
| 39 | AA:VOAc:AMPS | 60:10:30 | 10,000 | 87 |
| 40 | AA:VOAc:AMPS | 50:30:20 | 10,000 | 80 |
| 41 | AA:VOAc:AMPS | 50:20:30 | 10,000 | 92 |
| 42 | AA:VOAc:AMPS | 50:30:20 | 10,000 | 71 |
| 43 | AA:VOH:AMPS | 70:10:20 | 10,000 | 42 |
| 44 | AA:VOH:AMPS | 60:20:20 | 10,000 | 99 |
| 45 | AA:VOH:AMPS | 60:10:30 | 10,000 | 79 |

The following contractions appear in the above table:

AA = acrylic acid
MAA = methacrylic acid
AMPS = 2-acrylamido-2-methylpropane sulfonic acid
t-BuAm = tertiary butyl acrylamide
i-PrAm = isopropyl acrylamide
DAAm = diacetone acrylamide
DMAm = dimethylacrylamide
CA = carbitol acrylate
CMA = cellosolve methacrylate
VOAc = vinyl acetate
VOH = vinyl alcohol

MeOEA = methoxyethyl acrylate
EMA = ethyl methacrylate

Example 4

This example demonstrates stabilization of iron by various copolymers pursuant to the procedure described above using solutions containing the following:

iron ($Fe^{3+}$) = 3 ppm
polymer = 4 ppm
Ca = 300 ppm
Mg = 300 ppm
Na = 1120 ppm
Cl = 2170 ppm
$SO_4$ = 700 ppm
$HCO_3$ = 183 ppm

Results of iron stabilization are given in Table III, below:

Table III

| Test No. | Polymer Composition | | Mw Wt. | % Iron Stabilization |
|---|---|---|---|---|
| 1 | AA | 100 | 5,100 | 0 |
| 2 | AA | 100 | 10,000 | 0 |
| 3 | AA:MAA | 80:20 | 10,000 | 0 |
| 4 | AA:AMPS | 80:20 | 10,000 | 0 |
| 5 | AA:AMPS | 70:30 | 10,000 | 20 |
| 6 | AA:AMP | 60:40 | 10,000 | 31 |
| 7 | AA:MAA:AMPS | 60:20:20 | 10,000 | 2 |
| 8 | AA:t-BuAm:AMPS | 60:20:20 | 10,000 | 80 |
| 9 | AA:t-BuAm;AMPS | 70:10:20 | 10,000 | 75 |
| 10 | AA:MAA:t-BuAm:AMPS | 60:20:10:10 | 10,000 | 59 |
| 11 | AA:MAA:t-BuAm:AMPS | 30:20:20:30 | 10,000 | 65 |
| 12 | AA:MAA:t-BuAm:AMPS | 40:10:20:30 | 10,000 | 56 |
| 13 | AA:i-PrAm:AMPS | 60:20:20 | 10,000 | 90 |
| 14 | AA:i-PrAm:AMPS | 70:20:10 | 10,000 | 68 |
| 15 | AA:i-PrAm:AMPS | 70:10:20 | 10,000 | 65 |
| 16 | AA:MAA:i-PrAm:AMPS | 40:10:20:30 | 10,000 | 90 |
| 17 | AA:MAA:i-PrAm:AMPS | 40:10:30:20 | 10,000 | 74 |
| 18 | AA:DAAm:AMPS | 60:20:20 | 10,000 | 69 |
| 19 | AA:MAA:AM:CA | 54:21:9:16 | 10,000 | 53 |
| 20 | AA:MAA:AMPS:CA | 54:21:9:16 | 10,000 | 66 |

Table III (cont'd)

| Test No. | Polymer Composition | | Mw Wt. | % Iron Stabilization |
|---|---|---|---|---|
| 21 | AA:EMA:AMPS | 60:20:20 | 10,000 | 76 |
| 22 | AA:MeOEA:AMPS | 60:20:20 | 10,000 | 84 |
| 23 | AA:AMPS:MMA | 60:20:20 | 10,000 | 75 |
| 24 | AA:VOAc:AMPS | 60:20:20 | 10,000 | 84 |
| 25 | AA:VOH:AMPS | 60:20:20 | 10,000 | 73 |
| 26 | AA:VOAc:AMPS | 60:20:20 | 7,000 | 80 |
| 27 | AA:VOH:AMPS | 60:20:20 | 5,000 | 81 |
| 28 | AA:AMPS:VOAc | 60:30:10 | 10,000 | 46 |
| 29 | AA:AMPS:VOH | 60:30:10 | 10,000 | 39 |
| 30 | AA:AMPS:VOAc | 50:20:30 | 10,000 | 59 |
| 31 | AA:AMPS:VOH | 50:20:30 | 10,000 | 0 |
| 32 | AA:AMPS:VOAc | 60:10:30 | 10,000 | 0 |
| 33 | AA:AMPS:VOH | 60:10:30 | 10,000 | 0 |
| 34 | AA:AMPS:VOAc | 50:30:30 | 10,000 | 84 |
| 35 | AA:AMPS:VOH | 50:30:30 | 10,000 | 0 |
| 36 | AA:AMPS:VOAc | 50:20:30 | 10,000 | 53 |
| 37 | AA:AMPS:VOH | 50:20:30 | 10,000 | 0 |

The following contractions appear in the above table:

| | | |
|---|---|---|
| AA | = | acrylic acid |
| MAA | = | methacrylic acid |
| AMPS | = | 2-acrylamido-2-methylpropane sulfonic acid |
| t-BuAm | = | tertiary butyl acrylamide |
| i-PrAm | = | isopropyl acrylamide |
| DAAm | = | diacetone acrylamide |
| CA | = | carbitol acrylate |
| VOAc | = | vinyl acetate |
| VOH | = | vinyl alcohol |

Although effect of molcular weight on metal ion stabilization has not been studied to any great extent, it is known that the copolymers disclosed herein as being effective are in the molecular weight range of 1,000 to 100,000 preferably 2,000 to 20,000. The copolymers disclosed herein are effective to stabilize metal ions, such as iron zinc, and manganese. Amount of the metal ions is up to 10 ppm, particularly 1 to 5 ppm, in the aqueous solution.

EXAMPLE 5

This example demonstrates stabilization of iron (III) in the presence of scale forming ions, specifically calcium phosphate. Results of the test are set forth in Table IV below:

Table IV

| Copolymer Composition | Wt. Ratio | Mol. Wt. | Polymer Dosage (ppm) | % TI Ca/$PO_4$ | % Residual Iron in Solution |
|---|---|---|---|---|---|
| Control | | | 0 | 0 | 0 |
| AA:AMPS | 80:20 | 10,000 | 7.5 | 17 (13) | 5 |
| AA:AMPS | 51:49 | 10,000 | 7.5 | 75 (31) | 18 |
| AA:t-BuAM | 50:50 | 10,000 | 7.5 | 15 (13) | 7 |
| AA:MAA:t-BuAM:AMPS | 60:20:10:10 | 10,000 | 7.5 | 75 (49) | 42 |
| AA:t-BuAM:AMPS | 60:20:20 | 10,000 | 7.5 | 83 (56) | 39 |
| AA:MAA:t-BuAM:AMPS | 30:20:20:30 | 10,000 | 7.5 | 86 (50) | 52 |
| AA:MAA:iPrAm:AMPS | 40:10:20:30 | 10,000 | 7.5 | 89 (76) | 89 |
| AA:MAA:iPrAm:AMPS | 40:10:30:20 | 10,000 | 7.5 | 81 (60) | 57 |
| AA:iPrAM | 50:50 | 10,000 | 7.5 | 65 (55) | 37 |
| AA:MAA:t-BuAm:AMPS | 40:10:20:30 | 10,000 | 7.5 | 76 (55) | 55 |
| AA:DAAM | 80:20 | 10,000 | 7.5 | 41 (16) | 13 |
| AA:DAAM:AMPS | 60:20:20 | 10,000 | 7.5 | 66 (40) | 27 |
| AA:VOAc:AMPS | 60:10:30 | 10,000 | 7.5 | 68 (49) | 55 |
| AA:VOH:AMPS | 60:10:30 | 10,000 | 7.5 | 56 (31) | 12 |
| AA:VOAc:AMPS | 50:30:20 | 10,000 | 7.5 | 83 (64) | 66 |
| AA:VOH:AMPS | 50:30:20 | 10,000 | 7.5 | 56 (31) | 12 |

Contractions used in the above table have the same meaning as in previous tables.

In this series of tests calcium phosphate inhibition was measured in the presence of 1 ppm of soluble iron (III). The amount of residual iron remaining in solution was determined by atomic absorption spectroscopy. Results presented above confirm the effectiveness of the copolymers disclosed herein as stabilizers for heavy metal ions, specifically soluble iron, in a scaling medium.

Example 6

This example demonstrates effectiveness of the copolymers as dispersants for iron oxide particulate matter.

Dispersing activity or effectiveness was measured in the manner described above using 1 ppm of the copolymers in each instance. Results in terms of percent transmittance, are given in Table V, below:

Table V

| Copolymer Composition | Wt. Ratio | Mol. Wt. | % Transmittance |
|---|---|---|---|
| None | --- | --- | 86 (88) |
| AA | 100 | 10,000 | 64 |
| AMPS | 100 | 10,000 | 30 (54) |
| iPrAM | 100 | 10,000 | 88 |
| AA:AMPS | 90:10 | 10,000 | 72 |
| AA:AMPS | 80:20 | 10,000 | 56 |
| AA:AMPS | 70:30 | 10,000 | 25 (82) |
| AA:AMPS | 60:40 | 10,000 | 28 |
| AA:AMPS | 51:49 | 10,000 | 17 (54) |
| AA:t-BuAm | 80:20 | 10,000 | 25 |
| AA:t-BuAm | 60:40 | 10,000 | 21 (55) |
| AA:MAA:t-BuAm | 60:20:20 | 10,000 | 21 |
| AA:t-BuAm:AMPS | 60:20:20 | 10,000 | 7 (30) |
| AA:iPrAm | 80:20 | 10,000 | 34 |

| | | | |
|---|---|---|---|
| AA:iPrAm | 60:40 | 10,000 | 20 (53) |
| AA:iPrAm:AMPS | 60:20:20 | 10,000 | 12 (55) |
| AA:iPrAm:AMPS | 70:20:10 | 10,000 | 13 (68) |
| AA:iPrAm:AMPS | 70:10:20 | 10,000 | 14 |
| AA:iPrAm:AMPS | 40:50:10 | 10,000 | 12 (26) |
| AA:DAAm | 80:20 | 10,000 | 28 |
| AA:DAAm:AMPS | 60:20:20 | 10,000 | 19 (67) |
| AA:MeOEA | 80:20 | 10,000 | 34 |
| AA:MeOEA:AMPS | 60:20:20 | 10,000 | 10 (61) |
| AA:EMA | 80:20 | 9,000 | 31 |
| AA:EMA | 60:40 | 10,000 | 31 |
| AA:EMA:AMPS | 60:20:20 | 10,000 | 19 |
| AA:CMA | 80:20 | 10,000 | 31 |
| AA:CMA:AMPS | 60:20:20 | 10,000 | 10 |
| AA:MAA:Am:CA | 54:21:9:16 | 10,000 | 29 |
| AA:MAA:AMPS:CA | 54:21:9:16 | 10,000 | 21 |
| AA:HPA | 63:37 | 10,000 | 22 (73) |
| AA:HPA:AMPS | 65:30:5 | 10,000 | 10 (81) |
| AA:VOAc | 80:20 | 10,000 | 55 |
| AA:VOH | 80:20 | 10,000 | 62 |
| AA:VOAc | 70:30 | 10,000 | 52 |
| AA:VOH | 70:30 | 10,000 | 44 |
| AA:VOAc:AMPS | 70:10:20 | 10,000 | 46 |
| AA:VOH:AMPS | 70:10:20 | 10,000 | 37 |
| AA:VOAc:AMPS | 60:20:20 | 10,000 | 20 (66) |
| AA:VOH:AMPS | 60:20:20 | 10,000 | 24 |
| AA:VOAc:AMPS | 60:20:20 | 7,000 | 9 |
| AA:VOAc:AMPS | 60:20:20 | 5,000 | 11 (56) |
| AA:VOH:AMPS | 60:20:20 | 5,000 | 23 |
| AA:VOAc:AMPS | 50:20:30 | 10,000 | 37 |
| AMPS:iPrAm | 40:60 | * | 84 |
| AMPS:MAm | 70:30 | * | 72 |
| AMPS:Am | 30:70 | * | 46 (68) |
| AMPS:NaMaleate | 38:62 | * | 33 (86) |
| AA:Am:AMPS | 9:21:70 | * | 47 (46) |

| | | | |
|---|---|---|---|
| AA:Am:AMPS | 13:26:61 | * | 33 (40) |
| NaAMPS:NaAA | 70:30 | * | 35 (69) |
| NaAMPS:Am | 70:30 | * | 62 (66) |
| NaAMPS:NaMaleate | 59:41 | * | 25 (83) |

* These copolymers were prepared in accordance with the procedure given in U.S. 3,806,367 and 3,898,037. Molecular weights of the copolymers were not stated in these patents.

The following contractions appear in the above table:

| | |
|---|---|
| AA | = acrylic acid |
| MAA | = methacrylic acid |
| AMPS | = 2-acrylamido-2-methylpropane sulfonic acid |
| t-BuAm | = tertiary butylacrylamide |
| iPrAm | = isopropylacrylamide |
| DAAm | = diacetone acrylamide |
| MeOEA | = methoxyethyl acrylate |
| EMA | = ethyl methacrylate |
| CMA | = Cellosolve methacrylate |
| Am | = acrylamide |
| CA | = carbitol acrylate |
| HPA | = hydroxypropyl acrylate |
| VOAC | = vinyl acetate |
| VOH | = vinyl alcohol |
| MAm | = methacrylamide |
| Na-AMPS | = sodium 2-acrylamido-2-methylpropane sulfonic acid |
| Na-AA | = sodium acrylate |
| NaMaleate | = disodium maleate |

On the basis of the data in Table V, it should be apparent that terpolymers which contain an acrylic acid, an acrylamidoalkane sulfonic acid, and a primary comonomer are more effective dispersants than the 2-component copolymers or the homopolymers. The values in parenthesis are percent transmittance in presence of 1 ppm of soluble iron (III). With transmission of 30%, it appears that homopolymers of acrylamidoalkane sulfonic acids should be very effective dispersants for particulate matter such as iron oxide. As is well-known, homopolymers of such sulfonic acids are not used as dispersants since such homopolymers are poor scale inhibitors, they are less tolerant of soluble metal ions such as iron (III), and they are relatively too expensive.

It has been shown that the terpolymers disclosed herein are effective dispersants in the presence or absence of soluble metal ions. This is surprising since one would expect that such terpolymers would lose their dispersing effectiveness in the presence of soluble metal ions. Amount of soluble metal ions that can be present in an aqueous solution when the copolymers described herein are used as dispersants for particulate matter, may range up to about 10 ppm, particularly 1 to 5 ppm. The soluble metal ions contemplated herein include iron, manganese, and zinc, particularly the soluble iron ions in oxidation states of II and III.

A method for treating an aqueous medium comprising the step of adding to said aqueous medium about 0.5 to 500 ppm of a water-soluble copolymer of (a) 20 to 95% by weight of at least one monounsaturated carboxylic acid of 3 to 5 carbon atoms or its salt, (b) 1 to 60% by weight of at least one acrylamidoalkane sulfonic acid or its salt, and (c) with remainder to 100% by weight of a substituted acrylamide primary comonomer defined as follows:

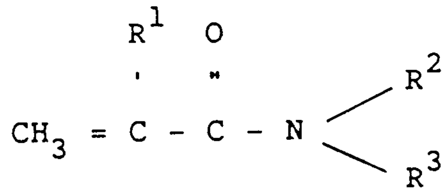

where $R^1$ is selected from hydrogen and methyl group, and $R^2$ and $R^3$ are individually selected from hydrogen and substituted and unsubstituted alkyl groups each containing 1 to 12 carbon atoms wherein substituents on said alkyl groups are selected from alkyl, aryl, carboxyl, and keto groups, provided that either $R^2$ or $R^3$ or both are other than hydrogen; said copolymer contains at least one monomer selected from each group (a), (b) and (c); said copolymer having weight average molecular weight in the range of about 1,000 to 100,000.

Method wherein amount of said carboxylic acid or its salt is 40 to 90%, amount of said sulfonic acid or its salt is 10 to 50%, and amount of said primary comonomer being the remainder to 100% based on the weight of said carboxylic acid or its salt, said sulfonic acid or its salt, and said primary comonomer.

Method wherein repeating units of said carboxylic acid and salts thereof in said copolymer are defined as follows:

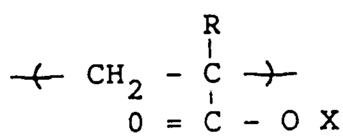

where R is selected from hydrogen and methyl group and X is selected from hydrogen, alkali metals, alkaline earth metals, and ammonium group; wherein repeating units of said sulfonic acid and salts thereof in said copolymer are defined as follows:

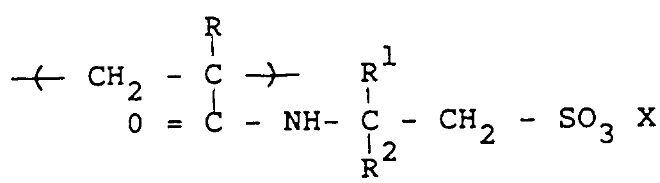

where R is selected from hydrogen and methyl group, $R^1$ and $R^2$ are individually selected from hydrogen and alkyl groups of 1 to 4 carbon atoms, and X is selected from hydrogen, alkali metals, alkaline earth metals, and ammonium group.

Method wherein said method for treating an aqueous medium is a method for inhibiting precipitation of scale by threshold inhibition.

Method wherein said method for treating an aqueous medium is a method for stabilizing metal ions in said aqueous medium.

Method wherein said method for treating an aqueous medium is a method for dispersing particulate matter in said aqueous medium.

A method for treating an aqueous medium inhibition comprising the step of adding to said aqueous medium about 0.5 to 500 ppm of a water-soluble copolymer of (a) 20 to 95% by weight of at least one monounsaturated carboxylic acid of 3 to 5 carbon atoms or its salt, (b) 1 to 60% by weight of at least one acrylamidoalkane sulfonic acid or its salt, and (c) with remainder to 100% by weight of at least one primary copolymerizable monomer; said copolymer has weight average molecular weight of 1,000 to 100,000; and said primary copolymerizable monomer is selected from alkyl acrylates, vinyl sulfonic acid and its salts, hydroxyalkyl acrylates, alkoxyalkyl acrylates, styrene sulfonic acid and salts thereof, allyloxy hydroxyalkane sulfonic acids and salts thereof, and vinyl carboxylates and hydyrolyzed carboxylates; wherein repeating units of said alkyl acrylates are defined as follows:

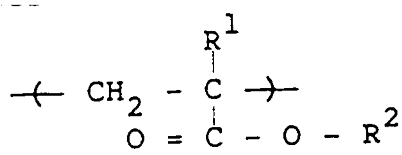

where $R^1$ is selected from hydrogen and methyl group and $R^2$ is selected from alkyl groups of 1 to 6 carbon atoms; repeating units of said vinyl sulfonic acid and its salts are defined as follows:

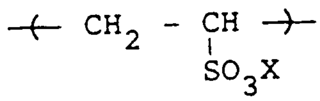

where X is selected from hydrogen, alkali metals, alkaline earth metals, and ammonium group; repeating units of said hydroxyalkyl acrylates are defined as follows:

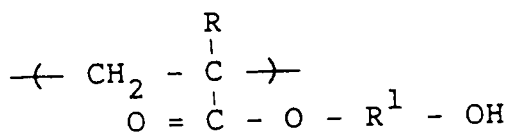

where R is selected from hydrogen and alkyl groups of 1 to 3 carbon atoms, and $R^1$ is selected from alkylene groups of [1] 2 to [6] 4 carbon atoms; repeating units of said alkoxyalkyl acrylates are defined as follows:

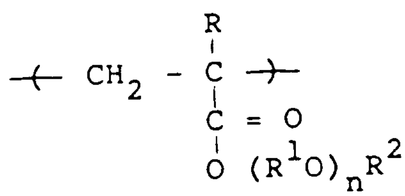

where R is hydrogen or methyl, $R^1$ is alkylene containing from 2 to 4 carbon atoms, n is an integer from 1 to 5, and $R^2$ is an alkyl group containing from 1 to 10 carbon atoms; repeating units of said styrene sulfonic acids and salts thereof are defined as follows:

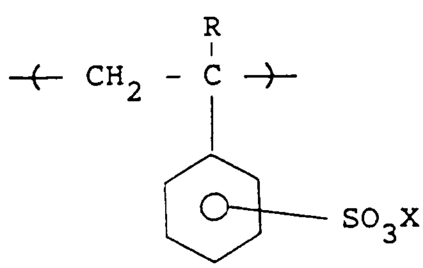

where R is selected from hydrogen and alkyl groups of 1 to 6 carbon atoms; and X is selected from hydrogen, alkali metals, alkaline earth metals, and ammonium; repeating units of allyloxy hydroxyalkane sulfonic acids and salts thereof are defined as follows:

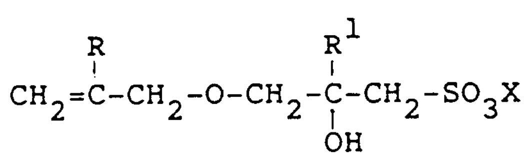

where R and $R^1$ are individually selected from hydrogen and methyl, and X is selected from hydrogen, alkali metals, alkaline earth metals, and ammonium; and repeating units of said vinyl carboxylates and hydrolyzed vinyl carboxylates are defined as follows by respective formulas I and II:

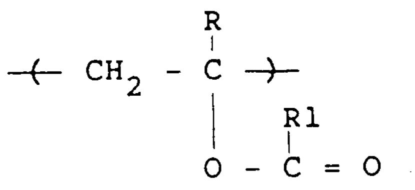

(I)

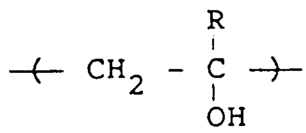

(II)

where R is selected from hydrogen and alkyl groups of 1 to 6 carbon atoms and $R^1$ is selected from alkyl groups of 1 to 12 carbon atoms.

Method wherein in said alkyl acrylates, $R^2$ is selected from alkyl groups of 1 to 4 carbon atoms; wherein in said vinyl sulfonic acid and its salts, X is selected from hydrogen, alkali metals, and ammonium group; wherein in said hydroxyalkyl acrylates, R is selected from hydrogen and methyl group and $R^1$ is selected from alkyl groups containing 2 to 4 carbon atoms; wherein in said alkoxyalkyl acrylates, $R^1$ is alkylene of 2 to 3 carbons, n is an integer of 1 to 3, and R is an alkyl of 1 to 4 carbons; wherein in said styrene sulfonic acids and salts thereof, R is selected from hydrogen and alkyl groups of 1 and 2 carbon atoms and X is selected from hydrogen, alkali metals, alkaline earth metals, and ammonium; wherein in said allyloxy hydroxyalkane sulfonic acids and salts thereof, R and $R^1$ are hydrogen; and wherein in said vinyl carboxylates and hydrolyzed vinyl carboxylates, R is selected from hydrogen and alkyl groups of 1 to 4 carbon atoms and $R^1$ is selected from alkyl groups of 1 to 8 carbon atoms.

Method wherein said copolymer also includes up to 10% by weight of at least one secondary copolymerizable monomer which is different from said primary comonomers, this amount is based on the combined weight of polymerized carboxylic acid or its salts, sulfonic acid or its salts, and primary comonomers.

Method wherein amount of said copolymer is 1 to 50 ppm and its molecular weight is about 2,000 to 20,000.

Method wherein said aqueous medium is selected from process water used in steam generating systems, recirculating cooling water systems, gas scrubbing systems, desalination water systems, and crude petroleum recovery systems.

Method wherein said carboxylic acid is selected from acrylic acid, methacrylic acid, and mixtures thereof; said sulfonic acid is 2-acrylamido-2-methylpropane sulfonic acid; and said primary comonomer is selected from hydroxypropyl acrylate, isopropyl acrylamide, t-butyl acrylamide, t-octylacrylamide, vinyl acetate, and mixtures thereof.

Method wherein said copolymer is selected from the following copolymers, given in respective weight parts;

(a) 60/20/10/10 copolymer of AA/MAA/t-BuAm/AMPS.
(b) 60/20/20 copolymer of AA/AMPS/t-BuAm,
(c) 60/20/20 copolymer of AA/AMPS/i-PrAm
(d) 30/20/20/30 copolymer of AA/MAA/t-Bu
(e) 70/10/20 copolymer of AA/AMPS/i-PrAm
(f) 40/10/20/30 copolymer of AA/MAA/i-PrAm/AMPS
(g) 40/10/30/20 copolymer of AA/MAA/i-PrAm/AMPS;
(h) 50/30/20 copolymer of AA/VOac/AMPS
(i) 60/20/20 copolymer of AA/VOAc/AMPS
(j) 50/30/30 copolymer of AA/VOAc/AMPS
(k) 50/30/20 copolymer of AA/VOH/AMPS
(l) 60/20/20 copolymer of AA/VOH/AMPS
(m) 60/30/10 copolymer of AA/HPA/AMPS
(n) 60/30/15 copolymer of AA/HPA/AMPS
(o) 60/20/20 copolymer of AA/AMPS/MeOEA
(p) 60/20/20 copolymer of AA/EMA/AMPS
(q) 60/20/20 copolymer of AA/CMA/AMPS
(r) 50/20/15/15 copolymer of AA/MAA/AMPS/CA

(s) 54/21/16/9 copolymer of AA/MAA/CA/AMPS

said copolymers having molecular weight in the range of about 2,000 to 20,000; wherein the contractions used herein are defined as follows:

| | | |
|---|---|---|
| AA | = | acrylic acid |
| MAA | = | methacrylic acid |
| t-BuAm | = | tertiary butyl acrylamide |
| AMPS | = | 2-acrylamido-2-methylpropane sulfonic acid |
| i-PrAm | = | isopropyl acrylamide |
| VOAc | = | vinyl acetate |
| CMA | = | cellusolve methacrylate |
| VOH | = | vinyl alcohol |
| HPA | = | hydroxypropyl acrylate |
| MeOEA | = | methoxyethyl acrylate |
| EMA | = | ethyl methacrylate |
| CA | = | 2-(2-ethoxyethoxy) ethylacrylate |

Method wherein in repeating units of said substituted acrylamide, $R^1$ is hydrogen and $R^2$ and $R^3$ are individually selected from hydrogen and alkyl groups of 2 to 8 carbon atoms.

Method wherein said copolymer also includes up to 10% by weight of secondary copolymerizable monomers which are different from said primary comonomers, this amount is based on the combined weight of polymerized carboxylic acid or its salts, sulfonic acid or its salts, and primary comonomers.

Method wherein amount of said copolymer is 1 to 50 ppm and its molecular weight is about 2,000 to 20,000.

Method wherein said aqueous medium is selected from process water used in steam generating systems, recirculating cooling water systems, gas scrubbing systems, desalination water systems, and crude petroleum recovery systems.

Method wherein said carboxylic acid is selected from acrylic acid, methacrylic acid, and mixtures thereof; said sulfonic acid is 2-acrylamido-2-methylpropane sulfonic acid; and said primary comonomer is selected from isopropyl acrylamide, t-butyl acrylamide, t-octyl acrylamide, and mixtures thereof.

Method wherein said method for treating an aqueous medium is a method for inhibiting precipitation of scale by threshold inhibition, said scale is selected from calcium phosphate, calcium sulfate, calcium carbonate, barium sulfate, strontium sulfate, magnesium hydroxide, mixtures thereof, and mixtures with other scale.

Method wherein said aqueous medium also contains soluble metal ions.

Method wherein said aqueous medium contains 1 to 5 ppm of soluble metal ions selected from iron, manganese, zinc, and mixtures thereof.

Method wherein said method for treating an aqueous medium is a method for stabilizing metal ions in said aqueous medium.

Method wherein said method for treating an aqueous medium is a method for dispersing particulate matter in said aqueous medium.

## Claims

**1.** A method for maintaining metal ions in solution in an aqueous medium comprising adding to said aqueous medium 0.5 to 500 ppm of an water-soluble copolymer comprising
(a) 20 to 95 % by weight carboxylic monomer selected from acrylic acid, methacrylic acid, salts of such acids and mixtures thereof,
(b) 1 to 60 % by weight of a sulfonic monomer selected from 2-acrylamido-2-methylpropane sulfonic acid, salts of said acid and mixtures thereof,
(c) a copolymerizable primary comonomer selected from styrene sulfonic acids, salts of such acids and mixtures thereof,
(d) up to 20 % by weight of one or more secondary copolymerizable monomers excluding substituted acrylamides, vinyl esters and vinyl acetate,
said copolymerizable primary copolymer being the remainder to 100 % by weight,
said copolymer has a weight average molecular weight in the range of about 1,000 to 100,000
and said metal ions are selected from iron, manganese, zinc and mixtures thereof.

**2.** Method of claim 1 wherein amount of said copolymer is 1 to 50 ppm and its molecular weight is in the range of about 2,000 to 20,000.

3. Method of claims 1 or 2 wherein said aqueous medium is alkaline and is selected from process water used in steam generating systems, recirculating cooling water systems, gas scrubbing systems, desalination water systems, and crude petroleum recovery systems.

4. Method of claim 1 wherein amout of said secondary monomer is up to 10 % by weight and molecular weight of said copolymer is about 2,000 to 20,000.

5. Method of claim 1 wherein said copolymer has molecular weight of about 2,000 to 20,000 and is selected from the following copolymers:
   (a) 40 to 90 % acrylic acid, methacrylic acid, or mixtures thereof;
   (b) 10 to 50 % 2-acrylamido-2-methylpropane sulfonic aicd;
   (c) styrene sulfonic acid or its salt, and mixtures thereof; and
   (d) up to 10 % of one or more other copolymerizable monomers, said styrene sulfonic acid or its salt being the remainder to 100 % by weight.

6. Method of claims 1 to 5 wherein in said copolymer, said styrene sulfonic acids and salts thereof are defined as repeating units as follows:

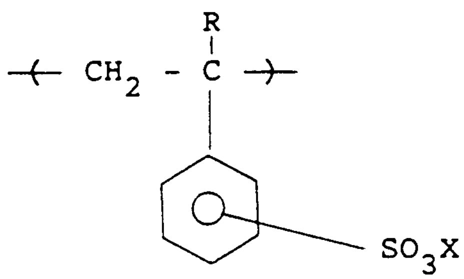

where R is selected from hydrogen and alkyl groups of 1 to 6 carbon atoms, and X is selected from hydrogen, alkali metals, alkaline earth metals, ammonium groups, and mixtures thereof.

7. Method of claim 6 wherein in the formula, R is selected from hydrogen and alkyl groups of 1 to 2 carbon atoms.

8. Method of claims 1 to 7 wherein said aqueous medium contains calcium scale selected from calcium phosphate, calcium sulfate, calcium carbonate, and mixtures thereof and wherein amount of said metal ions is up to 10 ppm in said aqueous medium.

9. Method of claims 1 to 8 wherein the amount of the metal ions is up to 10 ppm in said aqueous medium.

10. Method of claim 6 wherein in the formula, R is hydrogen and the $-SO_3X$ group is at the 3 or 4 position on the phenyl ring.

11. Method of anyone of claims 1 to 10, wherein the aqueous medium contains calcium and phosphate.

European Patent Office

# EUROPEAN SEARCH REPORT

Application Number

EP 91 12 1672

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4 ) |
|---|---|---|---|
| X | PATENT ABSTRACTS OF JAPAN vol. 5, no. 140 (C-70)(812) 4 September 1981 & JP-A-56 073 600 ( ORGANO K.K. ) 18 June 1981 | 1 | C02F5/12 |
| A | * abstract * | 3,8 | |
| X | EP-A-0 184 894 (CALGON CORPORATION) * page 3, line 15 - page 4, line 17; claims 1,5 * | 1-5 | |
| X,P | EP-A-0 206 814 (ROHM AND HAAS COMPANY) * page 2, line 16 - page 3, line 4 * * page 6, line 15 - page 7, line 9 * * page 11, line 23 - line 35 * | 1,2,4,5 | |
| A,D | US-A-3 806 367 (LANGE,K.R.) * the whole document * | 1-11 | |
| | | | TECHNICAL FIELDS SEARCHED (Int. Cl.4 ) |
| | | | C02F |

The present search report has been drawn up for all claims

| Place of search | Date of completion of the search | Examiner |
|---|---|---|
| THE HAGUE | 22 JANUARY 1992 | GONZALEZ ARIAS,M.L. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)